Europäisches Patentamt

**European Patent Office**

Office européen des brevets

(19)

(11) Publication number: **0 134 977 B1**

## EUROPEAN PATENT SPECIFICATION

(12)

(45) Date of publication of patent specification: **23.10.91**    (51) Int. Cl.⁵: **B29C 45/63,** B29C 47/76

(21) Application number: **84107883.5**

(22) Date of filing: **05.07.84**

(54) Method and apparatus for removing moisture and volatiles from molding particulate plastic material feed.

(30) Priority: **22.07.83 CA 433017**
**01.02.84 CA 446499**

(43) Date of publication of application:
**27.03.85 Bulletin 85/13**

(45) Publication of the grant of the patent:
**23.10.91 Bulletin 91/43**

(84) Designated Contracting States:
**AT BE CH DE FR GB IT LI LU NL SE**

(56) References cited:
**DE-A- 1 801 259**     **FR-A- 2 192 898**
**FR-A- 2 205 406**     **FR-A- 2 332 854**
**US-A- 3 335 462**     **US-A- 3 470 584**
**US-A- 3 940 220**

**KUNSTSTOFFE, vol. 73, no. 4, April 1983,
page 189, München, DE; "Abwärmenutzung
zur Materialtrocknung"**

(73) Proprietor: **MAPRO INC.**
**239 Armstrong Avenue**
**Georgetown Ontario L7G 4X5(CA)**

(72) Inventor: **Kopernicky, Jaroslav J.**
**17 Knightsbridge Road Apt. 508**
**Barmalea Ontario, L6T 3X9(CA)**

(74) Representative: **Patentanwälte Grünecker,**
**Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to plastic material and more particularly to the removal of moisture and volatiles from the plastic material according to the preambles of claims 1 and 21.

In the injection and extrusion molding fields, particulate plastic material is normally fed to an elongated screw which is rotated in a heated barrel to plasticize the material to form melt. Well known and difficult problems in these fields are the removal of moisture from the particulate plastic material before entering the barrel and the removal of volatiles which are produced during plasticizing. While the type and volume of volatiles produced varies with the type of material and the particular application, this term is generally used herein to refer to the vaporized moisture, additives, binders, softeners, lubricants and other materials given off as a gas during plasticizing. As is well known, the volatiles often include monomers or other materials which are toxic or otherwise undesirable in the working environment. If sufficient moisture and volatiles are not removed, then the products molded from the melt frequently contain bubbles or other unacceptable imperfections.

In regard to the moisture problem, the particulate plastic material is often hygroscopic and it is normally shipped and stored in sealed containers. Nevertheless, it has remained necessary to dry the material prior to use to produce a satisfactory product. This is often done by heating the material in dryers for several hours using elaborate equipment. Various apparatus such as drying and vacuum ovens and desiccant filters have been designed for this purpose. One early type of continuous dryer for grain is shown in U.S. Patent 759,527 which issued to Irwin May 10, 1904. However, drying has remained a requirement which is both costly and inconvenient due to the amount of electrical power necessary and the additional equipment required.

In regard to the volatiles problem, various provisions have been made to vent them from the barrel in which the screw rotates. However, this has the difficulty that the heat and the shearing forces produced by the screw that gradually melts the particulate plastic material and releases the volatiles causes problems with the vent. U.S. Patent 3,655,313 to Kunogi which issued April 11, 1972 discloses apparatus which controls the feed of particulate plastic material to the barrel. This structure has the disadvantage that it is difficult for the volatiles to escape. A later U.S Patent 3,826,477 to Kunogi et al. which issued July 30, 1974 discloses a relatively complicated combination of various barrel internal diameters and screw outer diameters to provide for a separate opening to which suction is applied. Both of these patents were assigned to Meiki Co., Ltd. which has a brochure entitled "M-Series Injection Molding Machine" No. C-320B 83. 8. 700 A which shows the use of a controlled feed with a separate vent opening. Providing a separate opening for the removal of the volatiles has the disadvantages that a longer more expensive screw is required and no heat is recovered from the hot volatiles passing through the incoming particulate plastic material.

More recently, as described in Canadian patent application Serial No. 398,389 filed March 15, 1982, the present inventor provides an earlier method and apparatus for the removal of the moisture and the volatiles without the necessity of pre-drying. This similarly involves applying suction to remove the volatiles through the opening in the barrel, and while this has worked very successfully for some applications, it has continuing problems for other applications. For instance, in some applications, the volatiles appear to have difficulty in flowing along the barrel to be removed through the opening. In large volume applications, plasticizing produces a considerable quantity of heat as well as moisture which tends to partially melt the particulate material in the area of the barrel opening causing it to bridge over and eventually restrict flow. In smaller applications, the mere presence of the suction tube in the opening can hinder flow of the particulate material. Furthermore, in injection molding applications, the normal process of the particulate material gradually melting as it is carried along the screw is disrupted when the screw is longitudinally actuated in the barrel to inject the melt. This causes the particulate material carried forward by the screw to be covered by the existing melt before the volatiles can be released. Another disadvantage of this previous device is that particles of plastic material are picked up by the hot gases and carried into the suction pipe at the material inlet. These airborne particles circulate in the interior of the preheater guide member and often stick together and to small particles from the incoming particualte material to form a cigar-shaped body which gradually builds up until it plugs the suction system.

An apparatus for removing volatiles from plastic material according to the preamble part of Claim 1 and a process for feeding particular plastic material according to the preamble part of Claim 21 are known from FR-A-2 205 406. This document discloses an apparatus for removing volatiles from hot plastic material including means for releasing said hot volatiles from the plastic material in the form of a pre-heating cylinder which, simultaneously houses controlled supply means in the form of a supply screw. On page 4, lines 12 to 14 of FR-A-2 205 406 it is described that the volatiles contained in the plastic material are released by the pre-heating in said pre-heating cylinder and then removed through a vent before the plastic material is supplied to the injection cylinder of the known apparatus. For this purpose the vent is provided in a passage connecting the pre-heating cylinder with the injection cylinder. Said vent is connected to a vacuum pump which forces the gasified contents from the resin material out through the vent.

Thus, the known apparatus comprises two openings, one which is the inlet opening of the injection cylinder, at the end of the passage in which the vent is disposed, whilst the other one is the afore-mentioned vent through which the hot volatiles are removed.

## SUMMARY OF THE INVENTION

It is an object underlying the present invention to provide an apparatus according to the preamble part of Claim 1 and a process according to the preamble part of Claim 21 which are able to at least partially overcome the disadvantages of the prior art which have been described in the foregoing passages.

The solution of this object is achieved by the features of Claims 1 and 21, respectively.

Thus, with the apparatus and process according to the present invention, a common opening in the barrel may be successfully used to both feed the particular plastic material and remove hot volatiles by utilizing a combination of controlled feeding and the application of suction to remove the volatiles.

Further objects and advantages of the invention will appear from the following description taken together with the accompanying drawings.

## BRIEF DESCRIPTION OF THE DRAWINGS

Figure 1 is a partial sectional view showing apparatus according to a first embodiment of the invention;

Figure 2 is a similar view showing apparatus according to another embodiment of the invention;

Figure 3 is a partial sectional view illustrating apparatus according to a further embodiment of the invention; and

Figure 4 is a cut-away isometric view of the rotary valve seen in Figure 3.

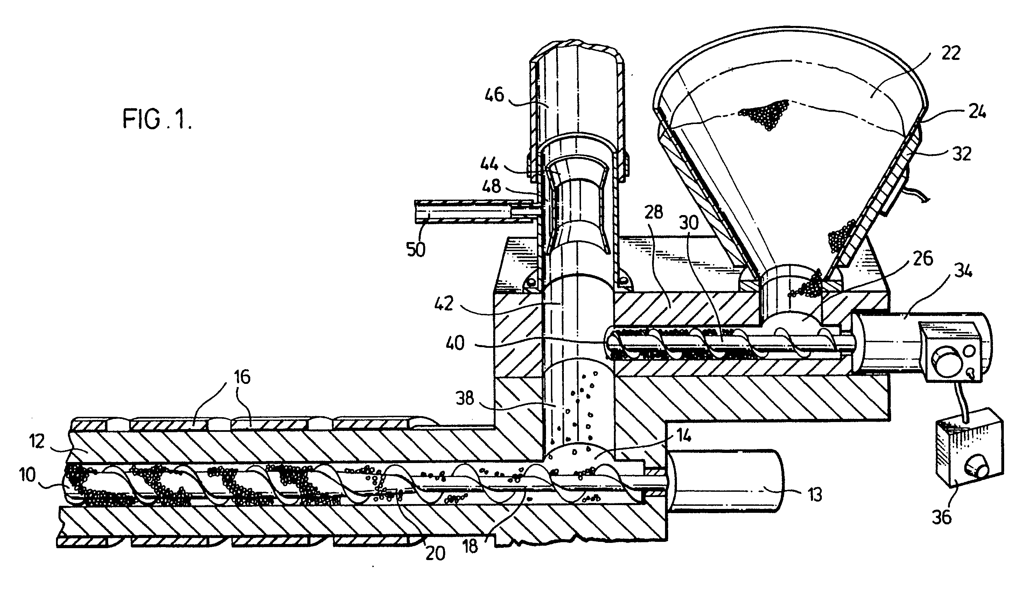

Reference is first made to Figure 1 which shows apparatus which plasticizes particulate plastic material into melt and feeds it for injection or extrusion molding. A conventional screw 10 is rotated in a barrel 12 by an electric or hydraulic motor 13 to carry the particulate plastic material received through an opening 14 in the barrel 12 towards a nozzle (not shown). The barrel 12 is heated by an electrical heating bands 16 and the screw has a conveying portion 18 adjacent the opening 14 and a plasticizing portion 20 where the size of the screw shaft gradually increases downstream from the conveying portion. Thus, as the particulate plastic material is carried (to the left in Figure 1) away from the barrel opening it is compressed and the heat and shearing forces cause it to gradually melt layer by layer, releasing entrapped volatiles. This process is amplified and accelerated by the considerable quantities of heat generated by friction in the material as it is "worked" by the screw.

As may be seen, a supply of particulate plastic material 22 is provided by a hopper 24 which funnels the material through an inlet 26 in the barrel 28 of a separate conveying screw 30. The hopper 24 has an electrical heating strip 32 to preheat the particulate plastic material as described below. The screw 30 is rotated in the barrel 28 by a motor 34 and the speed of rotation is controlled by a motor speed control 36. The conveying screw 30 carries the particulate plastic material at a predetermined rate to a feed passage 38 extending vertically upward from the barrel inlet opening 14. The particulate material is fed into the feed passage 38 through an opening 40 and it falls downward through the opening 14 into the barrel 12 where it is carried away by the rotating screw 10. The feed passage 38 also has a suction opening 42 to which a suction or negative pressure is applied by a nozzle 44 in an exhaust duct 46. The nozzle 44 has an annular space 48 to which compressed air is applied through hose 50 to create a venturi which generates the suction. Alternately, the suction could, of course, be supplied by a fan. The exhaust duct 46 extends to atmosphere or to air cleaning equipment to avoid the volatiles which often contain toxic gases contaminating the workplace.

In use, particulate plastic material 22 from the hopper 24 is carried by the conveying screw 30 to the feed passage 38 where it is dropped into the barrel 12 through the opening 14. At the same time, the suction from the venturi nozzle 44 exhausts the hot volatiles released as the particulate plastic is gradually melted in the barrel 12. The speed of the motor 34 is controlled by the motor speed control 36 to restrict or control the rate at which the particulate material is fed into the barrel 12 so that it is only partially filled adjacent the opening 14. The molecular structure of the hygroscopic material allows moisture to be absorbed deep inside its particles. As the material moves along the barrel it is heated and "worked" by the action of the screw, particularly when it reaches the plasticizing portion 20. The heat, pressure and shearing forces melt the particles layer by layer gradually releasing the moisture and other volatiles as a vapour which flows out of opening 14. While this release must necessarily occur gradually as the particles are melted, increasing the application of heat accelerates it because expansion of the trapped moisture cracks or ruptures the surface of the particles and the moisture and other volatiles burst out. The application of the suction by the venturi nozzle 44 exhausts the hot volatiles to atmosphere. It is desirable that the release of these gases primarily occur over a relatively short length of travel along the screw 10 before the material itself interferes with the withdrawal of the gases from the barrel 12 and this early release can be assisted by preheating the material in the hopper 24. The considerable quantity of heat generated by the action of the screw also helps to sustain this process as the gases flow along the screw 10 and up through the feed passage 38. It will be appreciated that the controlled feed of the particulate material which leaves room in the barrel 12 for the flow of these gases near the opening 14 is critical to their successful removal.

Furthermore, if the application is injection molding, the screw 12 will normally gradually withdraw as it rotates and then periodically be actuated longitudinally forward to inject the melt according to a predetermined cycle. In this case, the feed of particulate material to the barrel 12 will be interrupted during injection by stopping rotation of the motor 34 using motor control circuit 36. This avoids a quantity of unmelted material being suddenly carried deep into the barrel 12 from where withdrawal of the hot volatiles is difficult if not impossible.

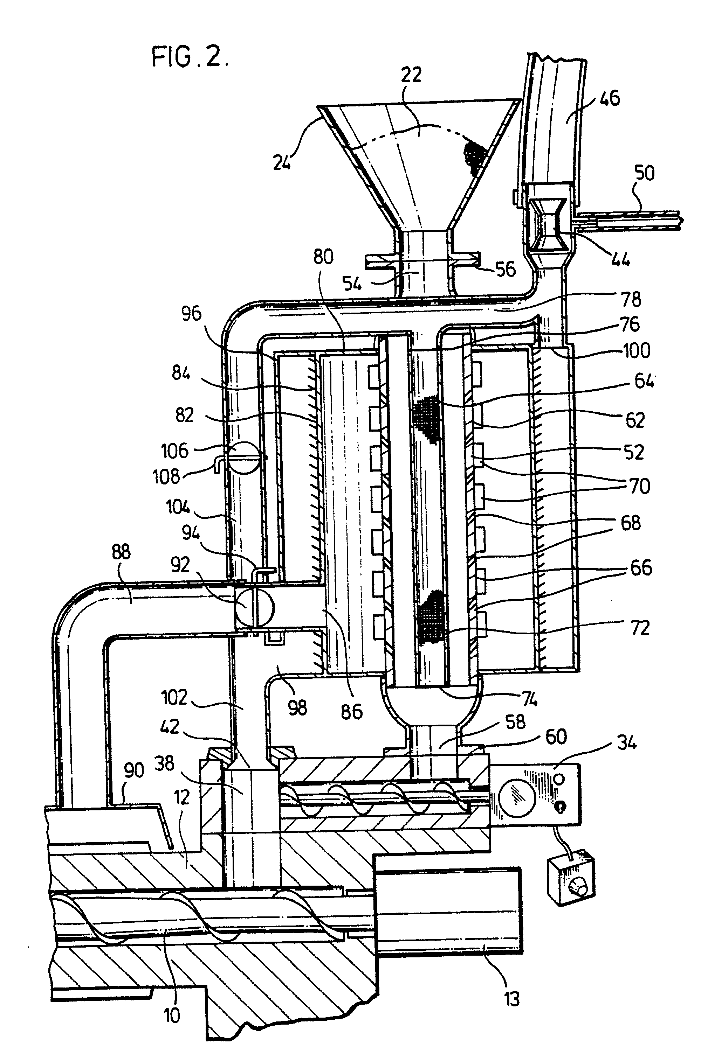

Reference is now made to Figure 2 which shows a modification of the above described embodiment. As many of the elements of this embodiment and the following embodiment are identical to those of the first embodiment, common elements are described and illustrated using the same reference numerals. In this embodiment, a tubular guide member 52 is mounted between the hopper 24 and the inlet 26 to preheat the particulate plastic material flowing into the barrel 28 of the conveying screw 30. The guide member 52 has an upper inlet 54 which is bolted to the hopper 24 at an abutment flange 56 and a lower outlet 58 bolted to the barrel 28 at another abutment flange 60. The guide member 52 has a rigid outer body 62 and a meshed inner body 64. The outer body 62 is formed of a number of steel rings 66 welded in a vertically spaced configuration to provide generally annular apertures 68 between them. The apertures 68 are angled upwardly at about 45° to provide for the passage of air, but not the escape of particulate material from the inside of the guide member 52. An electrical annular heating band 70 is secured to the outer surface of each of the rings 66 and they are connected to a temperature controller (not shown) to heat air drawn into the guide member 52 through the apertures 68. The hollow inner body 64 of the guide member is centrally located in and spaced from the outer body 62 and has a meshed cylindrical wall 72. The inner body has an open bottom 74 and an upper end 76 which is connected by a conduit 78 to the exhaust duct 46 containing the suction nozzle 44.

The outer body 62 of the guide member 52 is enclosed by a cylindrical housing 80 having an outer wall 82, formed of a conductive material such as sheet metal. In this embodiment, the walls 82 has numerous small fins 84 projecting outward from it to promote heat transfer. This inner housing 80 has an inlet 86 which is connected by conduit 88 to a heat gathering manifold 90 mounted over the heated barrel 12 to collect hot air given off by it. A conventional damper 92 is pivotally mounted in the inlet conduit 88 and has an external control handle 94 by which it may be rotated to regulate the flow of heated air to the inner housing 80.

The inner housing 80 is, in turn, enclosed by a cylindrical outer housing 96 to provide a heat exchanger. This outer heat exchanger housing 96 has an inlet 98 and an outlet 100 which is also connected to the exhaust duct 46 containing the suction nozzle 44. The inlet 98 is connected to a conduit 102 leading to the suction opening 42 to the feed passage 38. Thus, the hot volatiles from the barrel 12 are drawn through the heat exchanger housing 96 around the inner housing 80. For large applications where excessive quantities of hot gases are generated in the barrel 12 of the plasticizing screw 10, a bypass conduit 104 branches from conduit 102 and extends to conduit 78 to carry the hot gases from the feed passage suction opening 42 directly to the exhaust duct 46. The bypass conduit 104 also has a damper 106 pivotally mounted in it with an external control handle 108 to regulate the proportion of hot gases which pass through the heat exchanger housing 96.

Operation of this embodiment of the invention is similar to that described above. However, in this case, preheating as well as some limited pre-drying of the particulate plastic material is carried out as it flows through the guide member 52. As the particulate material flows from the hopper 24 down around the inner body 64 of the guide member 52, heated air from the apertures in the outer body 62 is drawn through it. The wall 72 of the inner body 64 is formed of a mesh which allows the incoming air to flow through it, but prevents the passage of the particulate material. The bottom 74 of the inner body 64 is left open because the particulate material will not flow upwardly into it and it does not extend down to interfere with the flow of particulate material into the inlet 26 to the barrel 28 of the conveying screw. Similarly, as is the case with the first embodiment, there is no constriction in the feed passage 38 to impede the flow of either the particulate material into the barrel 12 or the hot gases out of the barrel.

As mentioned above, the shearing action of the material as it is plasticized in the barrel 12 generates a considerable quantity of heat, most of which is withdrawn with the hot volatiles. In this embodiment of the invention, in order to improve efficiency and reduce electrical costs, these gases are drawn through the heat exchanger housing 96 where some of this waste heat is transferred to the incoming air in the inner housing 80. The incoming air collected by the manifold 90 is first heated by radiation from the hot barrel 12 and then by the heat transferred from the hot gases passing through the heat exchanger housing 96. Finally, if necessary, additional heat is provided by the heating bands 70 as the air flows through the apertures 68. While the amount of heat recovered from the hot gases varies with the volume and type of material being molded, normally the heating bands 70 need only be used during initial start-up. Preheating the particulate plastic material in the guide member 52 warms the particles through to their center and accelerates the process of removing the volatiles in the barrel 12. While the flow of hot air through it in the guide member does remove some surface moisture, the primary purpose is to preheat the material and it has been found that, for most plastics, preheating the material to temperatures in the range of 150-200° F will result in a product without defects due to entrapped gases. The dampers 92 and 106 in conduits 88 and 104 are adjusted in conjunction with the suction applied by the suction nozzle 44 to regulate the flow through them for each particular application. Sufficient hot air must be drawn through the guide member 52 to preheat the particulate material to the desired temperature, but it is undesirable to heat it too high. Therefore, if a large amount of heat is being generated during plastification, damper 106 may be opened to bypass some of it through conduit 104.

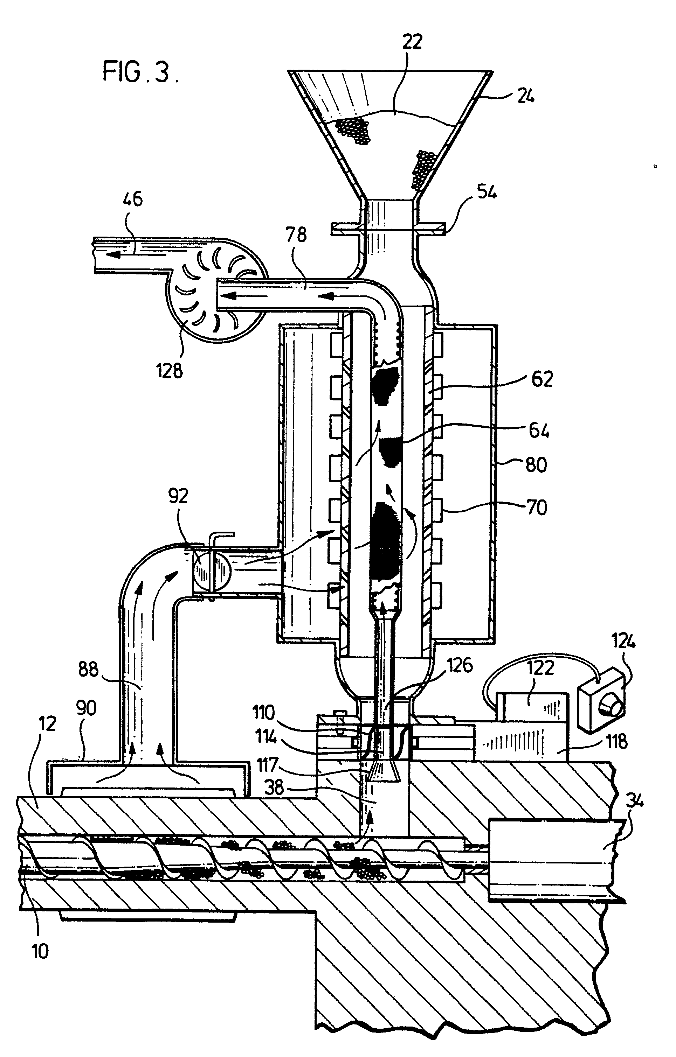

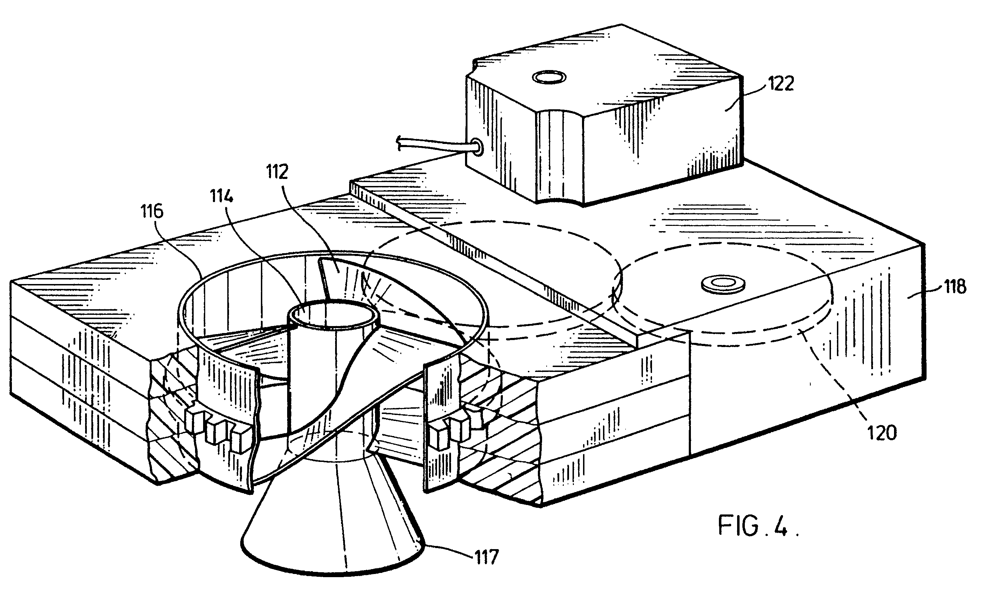

Reference is now made to Figures 3 and 4 which illustrate another embodiment of the invention. In this embodiment, the incoming particulate plastic material is preheated in a guide member 52 as described above, but the means for controlling or regulating the flow of it is different. In this case, the conveying screw with the speed controlled motor have been replaced by a rotary valve arrangement 110 mounted in the top of the feed passage 38 leading to the barrel opening 14. The rotary valve 110 has three pitched blades 112 which rotate on a hollow central duct 114 in a collar 116 which is in alignment with the feed passage 38. The central duct 114 has a funnel-shaped mouth 117 and the blades 112 are mounted in valve block 118 to be rotated in a counterclockwise direction through gears 120 by an electric motor 122. Rotation of the blades 112 is controlled in a manner described below by a motor speed control 124. The bottom 74 of the guide member inner body 64 is connected to a pipe 126 which extends downwardly to the central duct 114. As may be seen, in this embodiment, the nozzle in exhaust duct 46 has been replaced by a centrifugal fan 128 to supply the suction.

In use, the particulate material from the hopper 24 is preheated as it flows down through the guide member 52. The blades 112 of the rotary valve 110 are shaped and pitched to block the downward flow of particulate material when they are not rotating. However, when they are rotated, they bite into the particulate material above them and scatter it at a controlled rate of feed down into the feed passage 38 below. As mentioned above, as the particulate plastic material is "worked" by the screw in the barrel, the heat, pressure and shearing forces gradually release the hot volatiles which are vented upwardly out of the barrel by feed passage 38 through the central duct 114 of the rotary valve 110. Suction from the fan 128 draws the hot volatiles into the inner body 64 of the guide member where they mix with air being drawn through the incoming particulate material and are exhausted through duct 46. In this case, the incoming air to the guide member is received through conduit 88 and additional heat is added as it flows through the apertures 68 by the heating bands 70. If the plasticizing screw 10 has an injection stroke, then rotation of the blades 112 is periodically stopped according to a predetermined cycle to interrupt the feed of particulate material during injection as described above in regard to the flow control means shown in Figures 1 and 2.

Although the description of this invention has been given with respect to particular embodiments, it is not to be construed in a limiting sense. Variations and modifications may now occur to those skilled in the art. For instance, other means of providing the suction may be used, and alternate particulate material flow control means may be used. The heating bands 70 around the rings 66 of the guide member 52 may be replaced by heating coils or rods or other suitable means. For a definition of the invention, reference is made to the appended claims.

## Claims

1. Apparatus for removing volatiles from plastic material (22) being fed and plasticized for moulding by an elongated plasticizing screw (10) which rotates in a heated barrel (12), the barrel (12) having an inlet opening (14) through which the particulate plastic material (22) is received, the screw (10) having a plasticizing portion (20) and a conveying portion (18), the conveying portion (18) extending upstream from the plasticizing portion (20) to said inlet opening (14) in the barrel (12), comprising:

means for releasing hot volatiles from the plastic material,

suction means (44) connected to apply suction to remove said released hot volatiles through a releasing opening, and

controlled supply means (30, 34; 36; 110) for feeding the particulate plastic material (22) through the inlet opening (14) in the barrel (12),

**being characterised in that**

said plasticizing screw (10) and said heated barrel (12) simultaneously form the said means for releasing said hot volatiles which are removed out of said barrel (12) through said inlet opening (14), and

that said supply means (30, 34; 110) is controlled such that the rate of feed is adjusted to only partially fill the barrel (12) with particulate material (22) adjacent said inlet opening (14).

2. Apparatus as claimed in claim 1 including means (24) for preheating the particulate plastic material to remove moisture as it is fed to said opening (14) in the barrel (12).

3. Apparatus as claimed in claim 2 wherein the screw (10) has a plasticizing portion (20) and a conveying portion (18), the conveying portion (18) extending upstream from the plasticizing portion (20) to said opening (14) in the barrel (12).

4. Apparatus as claimed in claim 3 wherein the controlled supply means (30, 34, 36) interrupts the feed of particulate plastic material according to a predetermined cycle when the screw (10) is actuated longitudinally to inject melt for injection molding.

5. Apparatus as claimed in claim 3 wherein the controlled supply means comprises uncontrolled feed means (38) connected to supply particulate plastic material to flow control means (110).

6. Apparatus as claimed in claim 3 further comprising a feed passage (38) extending substantially vertically from said opening (14) in the barrel (12) through which the supply means drops the particulate plastic material and the hot volatiles are removed by the suction means (44) in the opposite direction.

7. Apparatus as claimed in claim 5 wherein the feed passage (38) has a suction opening (42) leading to the suction means (44) and a separate supply opening (40) through which the particulate plastic material is fed.

8. Apparatus as claimed in claim 7 wherein the flow control means (110) comprises conveying means (52) which conveys particulate plastic material from a source (24) of supply to the feed passage supply opening.

9. Apparatus as claimed in claim 8 wherein the conveying means comprises a separate conveying screw (30) rotated by a motor (34) having a speed control (36).

10. Apparatus as claimed in claim 5 wherein the flow control means (110) comprises a rotary valve means mounted in the feed passage (38) below the feed means, the valve means having a plurality of pitched blades (112) extending around a hollow central duct (114) which leads upwardly to the suction means (128) and controlled means (124) for rotating the blades (112), whereby particulate plastic material flows downwardly between the blades (112) when they are rotated in a horizontal plane at a controlled rate and the hot volatiles are removed upwardly through the hollow central duct (114).

11. Apparatus as claimed in claim 10 wherein the hollow central duct (114) has a funnel-shaped downwardly open mouth (117) to receive the vaporized moisture and hot volatiles.

12. Apparatus as claimed in claim 5 wherein the feed means comprises a hopper (24) located above the flow control means (110) to provide an uncontrolled gravity feed of particulate plastic material to the flow control means (110).

13. Apparatus as claimed in claim 5 further including particulate plastic material guide means (52) connected between the feed means (24) and the flow control means (110), the guide means (52) having an upper inlet (54) for receiving the particulate material and a lower outlet (58) leading to the flow control means (110), the guide means (52) including means (68, 70) for producing a flow of heated air through the particulate material to remove moisture as the particulate material flows between the inlet (54) and the outlet (58).

14. Apparatus as claimed in claim 13 wherein the guide means (52) includes means for raising the temperature of the particulate plastic material as the particulate plastic material flows between the inlet (54) and the outlet (58) of the guide means (52), including temperature control means which permits selection of the temperature to which the particulate plastic material is heated.

15. Apparatus as claimed in claim 14 wherein the guide means (52) has an outer body (62) extending between the upper inlet (54) and the lower outlet (58), and a hollow inner body (64) spaced from the outer body (62) with an upper end connected to the suction means (44), the outer and inner body (62, 64) having walls with apertures (68) therethrough which permit the flow of air but not the flow of particulate material therethrough, whereby the application of suction by the suction means (44) to the inner body (64) draws air through the apertures (68) through the particulate material flowing through the guide means (52) to preheat the particulate material.

16. Apparatus as claimed in claim 15 further comprising:

   a first housing (80) surrounding the outer body (62) of the guide means (52),

   heat gathering means (90) located adjacent the heated barrel (12), and

   conduit means (88) connecting the first housing (80) and the heat gathering means (90) whereby the suction means (44) draws air heated by the hot barrel (12) into the first housing (80) and then through the apertures (68) and the particulate plastic material.

17. Apparatus as claimed in claim 16 further including:

   first damper (92) means mounted in the conduit means (88) connecting the first housing (80) and the heat gathering means (90), and

   first damper control mean (94), whereby the rate of flow of hot air into the first housing (80) can be controlled.

18. Apparatus as claimed in claim 15 further comprising:

   a first inner heat conductive housing (80) surrounding the outer body (62) of the guide means, the first housing having an inlet (86) for receiving air which is drawn by the suction mean (44) through the apertures (68) and the particulate material flowing through the guide means (52), and

   a second outer heat exchanger housing (96) surrounding the first housing (80), the second housing (96) having an outlet (100) which is connected to the suction means (44) and an inlet (98) connected to draw the hot volatiles from said opening (14) in the barrel (12) around the inner housing (80),

   whereby heat from the hot volatiles is transferred to the air in the first inner housing (80) which is then drawn through the particulate plastic material.

19. Apparatus as claimed in claim 18 further comprising:

   second damper means (106) with second damper control means (108) adapted to control the rate of flow of hot volatiles to the heat exchanger housing (96).

20. Apparatus as claimed in claim 5 wherein the suction means (44) is connected to exhaust the volatiles released by the particulate plastic material to atmosphere.

21. A process for feeding particulate plastic material (22) and removing volatiles through a releasing opening, said particulate plastic material (22) being fed by a plasticising screw (10) which rotates in a heated barrel (12), comprising:

   feeding particulate plastic material to an inlet opening (14) in the barrel (12), and

   applying suction to remove hot volatiles from the particulate plastic material, **characterised by** the following steps:

   controlling the rate of feed such that the barrel (12) is only partially filled adjacent the inlet opening (14), and

   applying the suction to the inlet opening (14) through which the hot volatiles are removed which are released as the particulate plastic material is gradually melted by the heat and shearing forces as it is compressed by the screw as it is carried along the barrel away from said opening,

whereby the interruption of flow of the particulate material (22) into said barrel opening (14) by bridging of the particulate material (22) across said barrel opening (14) is avoided.

22. A process as claimed in claim 21 wherein the particulate plastic material is preheated to remove moisture as it is fed to said opening (14) in the barrel (12).

23. A process as claimed in claim 22 wherein the feed of particulate plastic material to said opening (14) is interrupted according to a predetermined cycle when the screw (10) is periodically actuated longitudinally to inejct melt from injection molding.

24. A process as claimed in claim 22 wherein the controlled feed of particulate plastic material is dropped through and the hot volatiles are removed through a feed passage (38) extending vertically from said opening (14) in the barrel (12).

25. A process as claimed in claim 22 wherein a flow of heated air is passed through the particulate plastic material as it flows towards the barrel inlet opening (14) to preheat it.

26. A process as claimed in claim 25 wherein the air flowing through the particulate plastic is collected from around the heated barrel (12).

27. A process as claimed in claim 25 wherein the air to be passed through the particulate plastic material and the hot volatiles removed from said opening (14) in the barrel (12) flow through heat exchanger means (96) wherein heat from the hot volatiles is transferred to the air flowing to the particulate plastic material.

28. A process as claimed in claim 22 wherein the hot volatiles are exhausted to outside atmosphere.

**Revendications**

1. Dispositif pour supprimer les matières volatiles d'une matière plastique (22) qui est fournie et plastifiée pour le moulage par une vis de plastification de forme allongée (10) qui tourne dans un cylindre chauffé (12), le cylindre (12) ayant une ouverture d'admission (14) par laquelle la matière plastique en particules (22) est admise, la vis (10) ayant une partie plastification (20) et une partie transport (18), la partie transport (18) s'étendant en amont de la partie plastification (20) vers ladite ouverture d'admission (14) dans le cylindre (12), comprenant :
des moyens pour supprimer des matières volatiles chaudes de la matière plastique,
des moyens d'aspiration (44) connectés pour appliquer une aspiration pour supprimer lesdites matières volatiles chaudes libérées à travers une ouverture d'évacuation, et
des moyens de fourniture commandés (30, 34, 36, 110) pour fournir la matière plastique en particules (22) par l'ouverture d'admission (14) dans le cylindre (12),
étant caractérisé en ce que
ladite vis de plastification (10) et ledit cylindre chauffé (12) forment simultanément lesdits moyens pour libérer lesdites matières volatiles chaudes qui sont évacuées dudit cylindre (12) par ladite ouverture d'admission (14), et
en ce que lesdits moyens de fourniture (30, 34 ; 110) sont commandés de façon telle que la vitesse de fourniture est ajustée pour remplir seulement partiellement le cylindre (12) avec la matière en particules (22) près de l'ouverture d'admission (14).

2. Dispositif selon la revendication 1 incluant des moyens (24) pour préchauffer la matière plastique en particules pour supprimer l'humidité lorsqu'elle est fournie à ladite ouverture (14) dans le cylindre (12).

3. Dispositif selon la revendication 2 dans lequel la vis (10) possède une partie plastification (20) et une partie transport (18), la partie transport (18) s'étendant en amont de la partie plastification (20) vers ladite ouverture (14) dans le cylindre (12).

4. Dispositif selon la revendication 3 dans lequel les moyens de fourniture commandés (30 , 34, 36) interrompent la fourniture de la matière plastique en particules selon un cycle prédéterminé lorsque la vis (10) est actionnée longitudinalement pour injecter le produit fondu pour un moulage par injection.

5. Dispositif selon la revendication 3 dans lequel les moyens de fourniture commandé comprennent des moyens de fourniture non commandé (38) connectés pour fournir la matière plastique en particules aux moyens de commande d'écoulement (110).

6. Dispositif selon la revendication 3 comprenant en outre un passage d'alimentation (38) s'étendant sensiblement de façon verticale depuis ladite ouverture (14) dans le cylindre (12) à travers lequel les moyens de fourniture font tomber la matière plastique en particules et à travers lequel les matières volatiles chaudes sont évacuées par les moyens d' aspiration (44) dans la direction opposée.

7. Dispositif selon la revendication 5 dans lequel le passage d'alimentation (38) possède une ouverture d'aspiration (42) conduisant vers les moyens d'aspiration (44) et une ouverture d'alimentation séparée (40) à travers laquelle la matière plastique en particules est fournie.

8. Dispositif selon la revendication 7 dans lequel les moyens de commande de l'écoulement (110) comprennent des moyens de transport (52) qui transportent la matière plastique en particules d'une source d'alimentation (24) à l'ouverture de fourniture du passage d'alimentation.

9. Dispositif selon la revendication 8 dans lequel les moyens de transport comprennent une vis de transport séparée (30) mise en rotation par un moteur (34) qui a un réglage de vitesse (36).

10. Dispositif selon la revendication 5 dans lequel les moyens de commande de l'écoulement (110) comprennent des moyens de vanne rotative montés dans le passage d'alimentation (38) au-dessous des moyens d'alimentation, les moyens de vanne ayant une pluralité de lames dressées vers le haut (112) S'étendant autour d'une conduite centrale creuse (114) qui conduit vers le haut vers les moyens d'aspiration (128) et des moyens commandés (124) pour faire tourner les lames (112), de façon que la matière plastique en particules s'écoule vers le bas entre les lames (112) quand elles sont en rotation dans un plan horizontal à une vitesse contrôlée et que les matières volatiles soient évacuées vers le haut à travers la conduite centrale creuse (114).

11. Dispositif selon la revendication 10 dans lequel la conduite centrale creuse (114) possède une ouverture ouverte vers le bas en forme d'entonnoir (117) pour recevoir l'humidité évaporée et les matières volatiles chaudes.

12. Dispositif selon la revendication 5 dans lequel les moyens d'alimentation comprennent une trémie (24) située au-dessus des moyens de commande de l'écoulement (110) pour fournir une alimentation par gravité non contrôlée de la matière plastique en particules aux moyens de commande de l'écoulement (110).

13. Dispositif selon la revendication 5 incluant en outre des moyens de guidage de la matière plastique en particules (52) connectés entre les moyens d'alimentation (24) et les moyens de commande de l'écoulement (110), les moyens de guidage (52) ayant un orifice d'admission supérieur (54) pour recevoir la matière en particules et un orifice de sortie inférieur (58) conduisant vers les moyens de commande de l'écoulement (110), les moyens de guidage (52) incluant des moyens (68,70) pour produire un flux d'air chauffé à travers la matière en particules pour supprimer l'humidité lorsque la matière en particules s'écoule entre l'orifice d'admission (54) et l'orifice de sortie (58).

14. Dispositif selon la revendication 13 dans lequel les moyens de guidage (52) incluent des moyens pour élever la température de la matière plastique en particules lorsque la matière plastique en particules s'écoule entre l'orifice d'admission (54) et l'orifice de sortie (58) des moyens de guidage (52), incluant des moyens de commande de la température qui permettent une sélection de la température à laquelle la matière plastique en particules est chauffée.

15. Dispositif selon la revendication 14 dans lequel les moyens de guidage (52) ont un corps extérieur (62) s'étendant entre l'orifice d'admission supérieur (54) et l'orifice de sortie inférieur (58), et un corps creux intérieur (64) espacé du corps extérieur (62) avec une extrémité supérieure connectée aux moyens d'aspiration (44), les corps extérieur et intérieur (62,64) ayant des parois avec des ouvertures (68) à travers lesquelles est possible l'écoulement de l'air mais pas l'écoulement de la matière en particules, de façon que l'application de l'aspiration par les moyens d'aspirations (44) au corps intérieur (64) attirent l'air à travers les ouvertures (68) à travers la matière en particules s'écoulant par les moyens de guidage (52) pour préchauffer la matière en particules.

16. Dispositif selon la revendication 15 comprenant en plus :
    une première enceinte (80) entourant le corps extérieur (62) des moyens de guidage (52) ,
    des moyens de récupération de chaleur (90) situés à côté du cylindre chauffé (12), et
    des moyens de conduite (88) reliant la première enceinte (80) et les moyens de récupération de chaleur (90), de façon que les moyens d'aspiration (44) attirent l'air chauffé par le cylindre chaud (12) dans la première enceinte (80), et ensuite à travers les ouvertures (68) et la matière plastique en particules.

17. Dispositif selon la revendication 16 incluant en plus:

des premiers moyens de clapet (42) montés dans les moyens de conduite (88) reliant la première enceinte (80) et les moyens de récupération de chaleur (90), et

des premiers moyens de commande de clapet (94), de façon que la vitesse du flux d'air chaud dans la première enceinte (80) puisse être réglée .

18. Dispositif selon la revendication 15 comprenant en plus :

une première enceinte intérieure conductrice de chaleur (80) entourant le corps extérieur (62) des moyens de guidage, la première enceinte ayant un orifice d'admission (86) pour recevoir l'air qui est attiré par les moyens d'aspiration (44) à travers les ouvertures (68) et la matière en particules s'écoulant par les moyens de guidage (52), et

une seconde enceinte extérieure d'échangeur de chaleur (96) entourant la première enceinte (80), la seconde enceinte (96) ayant un orifice de sortie (100) qui est relié aux moyens d'aspiration (44), et un orifice d'admission (98), connecté pour attirer les matières volatiles chaudes à partir de ladite ouverture (14), dans le cylindre (12), autour de l'enceinte intérieure (80),

de façon que la chaleur issue des matières volatiles chaudes soit transférée à l'air dans la première enceinte intérieure (80) lequel est ensuite aspiré à travers la matière plastique en particules.

19. Dispositif selon la revendication 18 comprenant en plus :

des seconds moyens de clapet (106) avec des seconds moyens de commande de clapet (108) adaptés à commander la vitesse du flux des matières volatiles chaudes vers l'enceinte de l'échangeur de chaleur (96).

20. Dispositif selon la revendication 5 dans lequel les moyens d'aspiration (44) sont reliés pour évacuer les matières volatiles libérées par la matière plastique en particules vers l'atmosphère.

21. Procédé pour fournir une matière plastique en particules (22) et éliminer les matières volatiles à travers une ouverture d'évacuation, ladite matière plastique en particules (22) étant fournie par une vis de plastification (10) que tourne dans un cylindre chauffé (12), comprenant :

la fourniture de la matière plastique en particule à une ouverture d'admission (14) dans le cylindre (12), et

l'application d'une aspiration pour évacuer les matières volatiles chaudes de la matière plastique en particules, caractérisé par les étapes suivantes :

commande de la vitesse d'alimentation de façon que le cylindre (12) soit rempli seulement partiellement près de l'ouverture d'admission (14), et

application de l'aspiration à l'ouverture d'admission (14) à travers laquelle les matières volatiles chaudes sont évacuées lesquelles sont libérées lorsque la matière plastique en particules est graduellement fondue par la chaleur et les forces de cisaillement lorsqu'elle est comprimée par la vis alors qu'elle est transportée le long du cylindre loin de ladite ouverture,

de façon que l'interruption de l'écoulement de la matière en particules (22) dans ladite ouverture de cylindre (14) par formation d'un pont par la matière en particules (22) à travers ladite ouverture de cylindre (14) soit évitée.

22. Procédé selon la revendication 21 dans lequel la matière plastique en particules est préchauffée pour retirer l'humidité lorsqu'elle est fournie à ladite ouverture (14) dans le cylindre (12).

23. Procédé selon la revendication 22 dans lequel la fourniture de la matière plastique en particules à ladite ouverture (14) est interrompue selon un cycle prédéterminé lorsque la vis (10) est périodiquement actionnée longitudinalement pour injecter le produit fondu dans un moulage par injection.

24. Procédé selon la revendication 22 dans lequel la fourniture contrôlée d'une matière plastique en particules descend à travers un et les matières volatiles chaudes sont évacuées par un passage d'alimentation (38) s'étendant verticalement à partir de ladite ouverture (14) dans le cylindre (12).

25. Procédé selon la revendication 22 dans lequel un flux d'air chaud passe à travers la matière plastique en particules lorsqu'elle s'écoule vers l'ouverture d'admission du cylindre (14) pour la préchauffer.

26. Procédé selon la revendication 25 dans lequel l'air s'écoulant à travers la matière plastique en particules est recueilli à partir des environ du cylindre chauffé (12).

27. Procédé selon la revendication 25 dans lequel l'air qui passe à travers la matière plastique en particules et les matières volatiles chaudes évacuées depuis ladite ouverture (14) dans le cylindre (12) s'écoulent à travers les moyens d'échangeur de chaleur (96) dans lesquels la chaleur issue des matières volatiles chaudes est transférée à l'air s'écoulant vers la matière plastique en particules.

28. Procédé selon la revendication 22 dans lequel les matières volatiles chaudes sont évacuées vers l'atmosphère extérieure.

## Patentansprüche

1. Vorrichtung zum Entfernen von flüchtigen Bestandteilen aus Kunststoffmaterial, das zum Formen durch eine langgestreckte Plastifizierungsschnecke (10) gefördert und plastifiziert wird, die in einem beheizten Zylinder (12) dreht, wobei der Zylinder (12) eine Einlaßöffnung (14) aufweist, durch welche das partikelförmige Kunststoffmaterial (22) aufgenommen wird, wobei die Schnecke (10) einen Plastifizierungsabschnitt (20) und einen Förderabschnitt (18) aufweist, der sich stromauf des Plastifizierungsabschnittes (20) zur Einlaßöffnung (14) im Zylinder (12) erstreckt, mit:

   einer Einrichtung zum Abgeben der heißen flüchtigen Bestandteile aus dem Kunststoffmaterial,

   einer Saugeinrichtung (44), die zum Aufbringen einer Saugwirkung angeschlossen ist, um die abgegebenen heißen flüchtigen Stoffe durch eine Abgabeöffnung zu entfernen, und

   einer gesteuerten Fördereinrichtung (30,34;36;110) zum Fördern des partikelförmigen Kunststoffmaterials (22) durch die Einlaßöffnung (14) im Zylinder (12), dadurch gekennzeichnet,

   daß die Plastifizierungsschnecke (10) und der beheizte Zylinder (12) gleichzeitig die Einrichtung zum Abgeben der heißen flüchtigen Bestandteile bilden, die durch die Einlaßöffnung (14) aus dem Zylinder (12) entfernt werden, und

   daß die Fördereinrichtung (30,34;110) derart gesteuert wird, daß die Fördergeschwindigkeit so eingestellt wird, daß der Zylinder (12) mit partikelförmigem Material (22) in der Nachbarschaft der Einlaßöffnung (14) nur teilweise gefüllt wird.

2. Vorrichtung nach Anspruch 1, die eine Einrichtung (24) zum Vorwärmen des partikelförmigen Kunststoffmaterials aufweist, um Feuchtigkeit zu entfernen, wenn es zur Öffnung (14) im Zylinder (12) gefördert wird.

3. Vorrichtung nach Anspruch 2, bei der die Schnecke (10) einen Plastifizierungsabschnitt (20) und einen Förderabschnitt (18) aufweist, wobei sich der Förderabschnitt (18) stromauf des Plastifizierungsabschnittes (20) zur Öffnung (14) im Zylinder (12) erstreckt.

4. Vorrichtung nach Anspruch 3, wobei die gesteuerte Fördereinrichtung (30,34,36) die Förderung des partikelförmigen Kunststoffmaterials gemäß einem vorbestimmten Zyklus unterbricht, wenn die Schnecke (10) in Längsrichtung betätigt wird, um geschmolzenes Material für Spritzguß einzuspritzen.

5. Vorrichtung nach Anspruch 3, wobei die gesteuerte Fördereinrichtung eine nichtgesteuerte Zuführeinrichtung (38) aufweist, die mit einer Durchflußsteuereinrichtung (110) zur Zuführung partikelförmigen Kunststoffmaterials verbunden ist.

6. Vorrichtung nach Anspruch 3, die weiterhin einen Förderkanal (38) aufweist, der sich im wesentlichen vertikal von der Öffnung (14) im Zylinder (12) erstreckt, durch welchen die Fördereinrichtung partikelförmiges Kunststoffmaterial herabfördert und durch welchen die heißen flüchtigen Bestandteile durch die Saugeinrichtung (44) in entgegengesetzer Richtung entfernt werden.

7. Vorrichtung nach Anspruch 5, wobei der Förderkanal (38) eine Saugöffnung (42) aufweist, die zur Saugeinrichtung (44) führt und eine separate Förderöffnung (40) aufweist, durch welche das partikelförmige Kunststoffmaterial gefördert wird.

8. Vorrichtung nach Anspruch 7, wobei die Durchflußsteuereinrichtung (110) eine Fördereinrichtung (52) aufweist, welche partikelförmiges Kunststoffmaterial von einer Förderquelle (24) zur Förderkanalförderöffnung fördert.

9. Vorrichtung nach Anspruch 8, wobei die Fördereinrichtung eine separate Förderschnecke (30) aufweist, die von einem Motor (34) mit einer Drehzahlsteuerung (36) gedreht wird.

10. Vorrichtung nach Anspruch 5, wobei die Durchflußsteuereinrichtung (110) eine Drehabsperrorganeinrichtung aufweist, die im Förderkanal (38) unterhalb der Zuführeinrichtung angeordnet ist, wobei die Absperrorganeinrichtung eine Mehrzahl von hochgezogenen Schaufeln (122) aufweist, die sich um eine hohle zentrale Leitung (114) erstrecken, welche nach oben zur Saugeinrichtung (128) und zur gesteuerten Einrichtung (124) zum Drehen der Schaufel (112) führt, wobei partikelförmiges Kunststoffmaterial zwischen den Schaufeln (112) nach unten fließt, wenn sie in einer horizontalen Ebene mit einer gesteuerten Geschwindigkeit gedreht werden und die heißen flüchtigen Bestandteile durch die hohle zentrale Leitung (114) nach oben entfernt werden.

11. Vorrichtung nach Anspruch 10, wobei die hohle zentrale Leitung (114) eine trichterförmige nach unten offene Mündung (117) aufweist, um verdampfte Feuchtigkeit und heiße flüchtige Bestandteile aufzunehmen.

12. Vorrichtung nach Anspruch 5, wobei die Zuführeinrichtung einen Behälter (24) aufweist, der oberhalb der Durchflußsteuereinrichtung (110) angeordnet ist, um eine nicht kontrollierte Schwerkraftförderung von partikelförmigem Kunststoffmaterial zur Durchflußsteuereinrichtung (110) zu erzeugen.

13. Vorrichtung anch Anspruch 5, die weiterhin eine Führungseinrichtung (52) für partikelförmiges Kunststoffmaterial aufweist, die zwischen der Zuführeinrichtung (24) und der Durchflußsteuereinrichtung (110) eingeschaltet ist, wobei die Führungseinrichtung (52) einen oberen Einlaß (54) zum Aufnehmen von partikelförmigem Material und einen unteren Auslaß (58) aufweist, der zur Durchflußsteuereinrichtung (110) führt, wobei die Führungseinrichtung (22) eine Einrichtung (68,70) zur Erzeugung eines Stromes von heißer Luft durch das partikelförmige Material aufweist, um Feuchtigkeit zu entfernen, wenn das partikelförmige Material zwischen dem Einlaß (54) und dem Auslaß (58) fließt.

14. Vorrichtung nach Anspruch 13, wobei die Führungseinrichtung (52) eine Einrichtung zur Erhöhung der Temperatur des partikelförmigen Kunststoffmaterials aufweist, wenn das partikelförmige Kunststoffmaterial zwischen dem Einlaß (54) und dem Auslaß (58) der Führungseinrichtung (52) fließt, wobei eine Temperatursteuereinrichtung vorgesehen ist, die die Wahl der Temperatur ermöglicht, auf welche das partikelförmige Kunststoffmaterial erwärmt wird.

15. Vorrichtung nach Anspruch 14, wobei die Führungseinrichtung (52) ein äußeres Gehäuse (62), das sich zwischen dem oberen Einlaß (54) und dem unteren Auslaß (58) erstreckt, und ein hohles inneres Gehäuse (64) aufweist, das vom äußeren Gehäuse (62) beabstandet ist und ein oberes Ende desselben mit der Saugeinrichtung (44) verbunden ist, wobei das äußere und das innere Gehäuse (62,64) Wände mit Öffnungen (68) aufweisen, welche den Fluß von Luft, jedoch nicht den Durchfluß von partikelförmigem Material ermöglichen, wobei das Anlegen der Saugwirkung durch die Saugeinrichtung (44) an das innere Gehäuse (64) Luft durch die Öffnungen (68) durch das partikelförmige Material leitet, das durch die Führungseinrichtung (52) fließt, um das partikelförmige Material vorzuwärmen.

16. Vorrichtung nach Anspruch 15, die weiterhin aufweist:

ein erstes Gehäuse (80), das das äußere Gehäuse (62) der Führungseinrichtung (52) umgibt,

eine Wärmesammeleinrichtung (90), die benachbart zum beheizten Zylinder (12) angeordnet ist, und

eine Leitungseinrichtung (88), die mit dem ersten Gehäuse (80) und der Wärmesammeleinrichtung (90) verbunden ist, wobei die Saugeinrichtung (44) durch den heißen Zylinder (12) erwärmte Luft in das erste Gehäuse (80) und dann durch die Öffnung (68) und das partikelförmige Kunststoffmaterial leitet.

17. Vorrichtung nach Anspruch 16, die weiterhin aufweist:

eine erste Dämpfer- bzw. Sperreinrichtung (92), die in der Leitungseinrichtung (88) angeordnet ist und das erste Gehäuse (80) und die Wärmesammeleinrichtung (90) verbindet, und

eine erste Dämpfersteuereinrichtung (94), wobei die Durchflußgeschwindigkeit der heißen Luft in das erste Gehäuse (80) gesteuert bzw. geregelt werden kann.

18. Vorrichtung nach Anspruch 15, die weiterhin aufweist:

ein erstes inneres Wärmeleitgehäuse (80), das das äußere Gehäuse (62) der Führungseinrichtung umgibt, wobei das erste Gehäuse einen Einlaß (86) zur Aufnahme von Luft aufweist, welche von der Saugeinrichtung (44) durch die Öffnung (68) und das durch die Führungseinrichtung (52) fließende Material geleitet wird, und

ein zweites äußeres Wärmetauscherghäuse (96), das das erste Gehäuse (80) umgibt, wobei das zweite Gehäuse (96) einen Auslaß (100) aufweist, der mit der Saugeinrichtung (44) verbunden ist und einen Einlaß (98) aufweist, der zum Herausleiten heißer flüchtiger Bestandteile aus der Öffnung (14), im Zylinder (12), um das innere Gehäuse (80) verbunden ist, wobei Wärme aus den heißen flüchtigen Bestandteilen zu der Luft im ersten inneren Gehäuse (80) übertragen wird, welche dann durch das partikelförmige Kunststoffmaterial geleitet wird.

19. Vorrichtung nach Anspruch 18, die weiterhin aufweist:

eine zweite Dämpfer- bzw. Sperreinrichtung (106) mit einer zweiten Dämpfersteuereinrichtung (108), die zur Steuerung der Durchflußgeschwindigkeit der heißen flüchtigen Bestandteile zum Wärmetauschergehäuse (96) vorgesehen ist.

20. Vorrichtung nach Anspruch 5, wobei die Saugeinrichtung (44) zum Absaugen der Bestandteile, die aus dem partikelförmigen Kunststoffmaterial freigegeben worden sind, zur Atmosphäre angeschlossen ist.

21. Verfahren zum Fördern partikelförmigen Kunststoffmaterials (22) und zum Entfernen von flüchtigen Bestandteilen durch eine Abgabeöffnung, wobei das partikelförmige Kunststoffmaterial (22) von einer Plastifizierungsschnecke (10) gefördert wird, die in einem beheizten Zylinder (12) dreht, das folgende Verfahrensschritte umfaßt:

Fördern des partikelförmigen Kunststoffmaterials zu einer Einlaßöffnung (14) im Zylinder (12), und

Anlegen einer Saugwirkung, um heiße flüchtige Bestandteile aus dem partikelförmigen Kunststoffmaterial zu entfernen, gekennzeichnet durch folgende Verfahrensschritte:

Steuern der Fördergeschwindigkeit derart, daß der Zylinder (12) benachbart zu seiner Einlaßöffnung (14) nur teilweise gefüllt wird, und

Anlegen der Saugwirkung an die Einlaßöffnung (14), durch welche die heißen flüchtigen Bestandteile entfernt werden, welche freigegeben werden, wenn das partikelförmige Kunststoffmaterial allmählich durch die Wärme und die Scherkräfte geschmolzen wird, wenn es durch die Schnecke komprimiert wird und wenn es entlang des Zylinders weg von der Öffnung bewegt wird,

wobei die Unterbrechung der Strömung des partikelförmigen Materials (22) in die Zylinderöffnung (14) durch eine Brückenbildung des partikelförmigen Materials (22) über die Zylinderöffnung (14) vermieden wird.

22. Verfahren nach Anspruch 21, wobei das partikelförmige Kunststoffmaterial vorgewärmt wird, um Feuchtigkeit zu entfernen, wenn es zur Öffnung (14) im Zylinder(12) gefördert wird.

23. Verfahren nach Anspruch 22, wobei die Förderung des partikelförmigen Kunststoffmaterials zur Öffnung (14) gemäß einem vorbestimmten Zyklus unterbrochen wird, wenn die Schnecke (10) periodisch in Längsrichtung betätigt wird, um geschmolzenes Material zum Spritzgießen einzuspritzen.

24. Verfahren nach Anspruch 22, wobei die gesteuerte Förderung des partikelförmigen Kunststoffmaterials durch einen Förderkanal (38) erfolgt und die heißen flüchtigen Bestandteile durch den Förderkanal (38) entfernt werden, der sich vertikal von der Öffnung (14) des Zylinders (12) erstreckt.

25. Verfahren nach Anspruch 22, wobei ein Strom erwärmter Luft durch das partikelförmige Kunststoffmaterial hindurchgeleitet wird, wenn es zur Zylindereinlaßöffnung (14) fließt, um es vorzuwärmen.

26. Verfahren nach Anspruch 25, wobei die Luft, die durch das partikelförmige Kunststoffmaterial fließt, aus der Umgebung des beheizten Zylinders (12) gesammelt wird.

27. Verfahren nach Anspruch 25, wobei die Luft, die durch das partikelförmige Kunststoffmaterial hindurchgeleitet werden soll, und die heißen flüchtigen Bestandteile, die aus der Öffnung (14) im Zylinder (12) entfernt werden, durch eine Wärmetauschereinrichtung (96) fließen, wobei Wärme von den heißen flüchtigen Bestandteilen auf die zum partikelförmigen Kunststoffmaterial fließende Luft übertragen wird.

28. Verfahren nach Anspruch 22, wobei die heißen flüchtigen Bestandteile zur äußeren Atmosphä-
re abgesaugt werden.

FIG. 1.

FIG.2.

FIG.3.

FIG. 4 .

EP 0 134 977 B1